# EUROPÄISCHE PATENTANMELDUNG

(11) **EP 4 134 574 A1**
(43) Veröffentlichungstag der Anmeldung: **15.02.2023**
(21) Anmeldenummer: 22189571.7
(22) Anmeldetag: 09.08.2022
(51) Int. Cl.: F16K 5/06, A62C 3/00, F16K 5/20, F16K 27/06

(54) **KUGELHAHN**

(30) Priorität: 10.08.2021 DE 102021120801
(71) Anmelder: MSP-Armaturen GmbH, 32289 Rödinghausen (DE)
(72) Erfinder: PERNOW, Fred-Wolfgang, 32139 Spenge (DE)
(74) Vertreter: Kleine, Hubertus

(57) **Zusammenfassung**

Die Erfindung betrifft einen Kugelhahn mit einem Ventilkörper (1) mit mindestens zwei Anschlussstutzen (2) und einer drehbar im Ventilkörper (1) gelagerten Kugel (6) mit einer Durchgangsbohrung, wobei zur Abdichtung der Kugel (6) gegenüber den Anschlussstutzen (2) jeweils ein Ventilsitz (4) mit einer ringförmigen Weichdichtung (5) vorhanden ist und eine metallische Dichtung vorgesehen ist, an der die Kugel (6) bei einer hitzebedingten Beschädigung der Weichdichtung (5) anliegt. Der Kugelhahn zeichnet sich dadurch aus, dass im Ventilkörper (1) eine umlaufende Nut (41) ausgebildet ist, die die ringförmige Weichdichtung (5) aufnimmt, wobei eine radial innere Begrenzung der Nut (41) als ein umlaufender Steg (42) ausgeformt ist, der die metallische Dichtung bildet.

## Beschreibung

Die Erfindung betrifft einen Kugelhahn mit einem Ventilkörper mit mindestens zwei Anschlussstutzen und einer drehbar im Ventilkörper gelagerten Kugel mit einer Durchgangsbohrung, wobei zur Abdichtung der Kugel gegenüber den Anschlussstutzen jeweils ein Ventilsitz mit einer ringförmigen Weichdichtung vorhanden ist. Weiter ist eine metallische Dichtung vorgesehen, an der die Kugel bei einer hitzebedingten Beschädigung der Weichdichtung anliegt.

Kugelhähne werden in unterschiedlichsten Größen vielfach zur Steuerung von Gas- oder Flüssigkeitsströmen, nachfolgend zusammengefasst als Fluidströme bezeichnet, eingesetzt. Sie finden auch Anwendung in Anlagen, die hitze- bzw. feuerfest sein müssen, beispielsweise in Feuerlöschanlagen.

In einem Brandfall können die Kugelhähne Temperaturen ausgesetzt sein, die die genannte Weichdichtung so stark beschädigen, dass die Kugelhähne den Fluidstrom nicht mehr zuverlässig blockieren können. Als Weichdichtung wird dabei i. d. R. ein Kunststoff eingesetzt, auch ein bei normaler Umgebungstemperatur durchaus harter Kunststoff wie PTFE (Polytetrafluorethylen). Unter Hitzeeinwirkung kann die Weichdichtung zerfließen oder bei noch größerer Hitze sublimieren und vollständig entfernt sein.

Um Leckraten bei geschlossenen Kugelhähnen in einem derartigen Fall klein zu halten, sind Kugelhähne bekannt, die neben der Weichdichtung eine metallische Dichtung aufweisen, die bei Zerstörung oder Verlust der Weichdichtung eine Abdichtung übernehmen können.

Ein Kugelhahn mit einer derartigen Kombination aus einer Weichdichtung und einer metallischen Dichtung ist beispielsweise aus der Druckschrift DE 33 36 099 A1 bekannt. Die metallische Dichtung weist dabei die Form einer Scheibenfeder auf, um sich mit möglichst geringer Leckrate an die Kugel anzudrücken. Die Scheibenfeder muss im Kugelhahn an geeigneter Stelle positioniert und auch in Position gehalten werden, was den Aufbau und den Zusammenbau des Kugelhahns verkompliziert.

Aus der Druckschrift DE 196 21 493 A1 ist ebenfalls ein Kugelhahn mit Weichdichtung und metallischer Dichtung bekannt, wobei die metallische Dichtung in Durchflussrichtung des Mediums gesehen hinter der Weichdichtung liegt und in Form eines Buntmetallrings in das Gehäuse bzw. den Anschlussstutzen des Kugelhahns eingelassen ist. Auch hierbei stellt der zusätzlich eingesetzte Buntmetall-Dichtring eine weitere Komponente dar, die den Aufbau und Zusammenbau des Kugelhahns aufwendiger macht.

Gemäß aktueller Normen, beispielsweise der DIN EN ISO 10497, sind die Anforderungen an feuerfeste Armaturen weiter gestiegen. Dichtigkeitstests werden mit Temperaturen von 750 - 1000 °C (Grad Celsius) für einen Zeitraum von bis zu einer Stunde durchgeführt. Auch wenn die metallischen Materialien und somit auch die metallische Dichtung grundsätzlich diesen Temperaturen standhalten können, führen temperaturbedingte Verformungen des gesamten Ventilkörpers zu Dichtigkeitsproblemen bei den aus dem Stand der Technik bekannten zusätzlichen metallischen Dichtungen.

Es ist eine Aufgabe der vorliegenden Erfindung, einen feuerfesten Kugelhahn der eingangs genannten Art zu schaffen, der über längeren Zeitraum auch hohen Temperaturen von mindestens 750 °C mit geringen Leckraten standhalten kann, ohne dass der Aufbau und der Zusammenbau des Kugelhahns dadurch verkompliziert ist.

Diese Aufgabe wird durch einen Kugelhahn mit den Merkmalen des unabhängigen Anspruchs gelöst. Vorteilhafte Ausgestaltung und Weiterbildungen sind Gegenstand der abhängigen Ansprüche.

Ein erfindungsgemäßer Kugelhahn der eingangs genannten Art zeichnet sich dadurch aus, dass im Ventilkörper eine umlaufende Nut ausgebildet ist, die die ringförmige Weichdichtung aufnimmt, wobei eine radial innere Begrenzung der Nut als ein umlaufender Steg ausgeformt ist, der die metallische Dichtung bildet.

Bei dem erfindungsgemäßen Kugelhahn ist die Weichdichtung somit in einer Nut des Ventilkörpers eingesetzt. Die Nut ist bevorzugt unmittelbar im Material des Ventilkörpers ausgebildet. Die radial innere Begrenzungswand der Nut ist ein radial umlaufender Steg, dessen Breite (definiert als seine Ausdehnung in radialer Richtung) bevorzugt kleiner ist als seine Höhe (definiert als seine Ausdehnung in axialer Richtung, der Richtung des Fluidstroms durch den Kugelhahn).

Dieser relativ zu seiner Höhe schmale Steg bildet die metallische Dichtung, die bei Beschädigung der Weichdichtung zum Einsatz kommt. Wenn im Brandfall nach Beschädigung oder Verflüchtigung der Weichdichtung die Kugel des Kugelhahns auf diesen umlaufenden Steg drückt, kann sich dieser der Kugelform auch bei einem hitzebedingten Verziehen des Ventilkörpers anpassen, wodurch die Dichtigkeit erhöht wird und eine geringe Leckrate erzielt wird. Durch diese spezielle Ausgestaltung und Geometrie kann ein sowieso benötigtes Element, nämlich die Nut zur Aufnahme der Weichdichtung, so ausgebildet sein, dass ohne Mehraufwand in Herstellung und Montage die metallische Dichtung integraler Bestandteil des Ventilkörpers ist.

In einer vorteilhaften Ausgestaltung des Kugelhahns ist die Höhe des Stegs um einen Faktor von mindestens 2 größer als seine Breite, wodurch eine Verformbarkeit und Anpassung an die Kugelform erzielt wird, die besonders geringe Leckraten auch im Brandfall ermöglicht. Die Höhe des Stegs liegt bevorzugt im Bereich von etwa 3 bis 7 mm (Millimeter) und die Breite des Stegs im Bereich von etwa 1 bis 3 mm. Weiter bevorzugt ist eine Oberfläche der Kugel bei intakter Weichdichtung um nicht mehr als 0,5 mm und insbesondere nicht mehr als 0,2 mm von der Anlagefläche des Stegs, an der die Kugel bei beschädigter Weichdichtung anliegt, entfernt. Der genannte Abstand wird bevorzugt so klein gewählt, um sicherzustellen, dass die Kugel ohne nennenswerte Bewegung entlang der Längsachse des Kugelhahns den als Ersatzdichtung fungierenden Dichtungsrand erreichen kann. Eine mangelnde Beweglichkeit der Kugel, z. B. aufgrund ihrer Kopplung an eine die Kugel betätigende (drehende) Spindel, könnte andernfalls eine zuverlässige Dichtung im Brandfall verhindern.

In einer weiteren vorteilhaften Ausgestaltung des Kugelhahns liegt die Weichdichtung mit einem Abschnitt auf einem Rand des Stegs auf. So wird ein Kontakt der Kugel im Regelbetrieb, die zu einem Verkratzen der Oberfläche der Kugel führen könnte, sicher verhindert. Die metallische Dichtung dient nur der Aufrechterhaltung der Dichtigkeit im Brandfall.

In einer weiteren vorteilhaften Ausgestaltung des Kugelhahns sind der Ventilkörper und/oder die Kugel aus Edelstahl gefertigt. Als Material für die Weichdichtung kann z.B. PTFE eingesetzt werden.

In einer weiteren vorteilhaften Ausgestaltung des Kugelhahns ist der Ventilkörper aus zwei Teilen zusammengesetzt, die miteinander verschraubt sind. Bevorzugt werden die beiden Teile des Ventilkörpers zusätzlich im Bereich der Verschraubung miteinander verschweißt, um eine Dichtigkeit des Ventilkörpers nach außen im Brandfall zu gewährleisten. Weiter bevorzugt ist eine Spindel zur Drehbetätigung der Kugel vorgesehen, die in dem Ventilkörper durch eine Stopfbuchse abgedichtet ist. Es hat sich gezeigt, dass die Abdichtung mittels einer Stopfbuchse sich im Brandfall als besonders widerstandsfähig erweist.

Die Erfindung wird nachfolgend anhand eines Ausführungsbeispiels mithilfe von Figuren näher erläutert. Die Figuren zeigen:
- Fig. 1: eine schematische Schnittdarstellung eines erfindungsgemäßen feuerfesten Kugelhahns; und
- Fig. 2a, b: jeweils eine schematische Schnittdarstellung des Anlagebereichs einer Kugel des Kugelhahns an einer Weichdichtung (Fig. 2a) bzw. an der metallischen Dichtung (Fig. 2b);

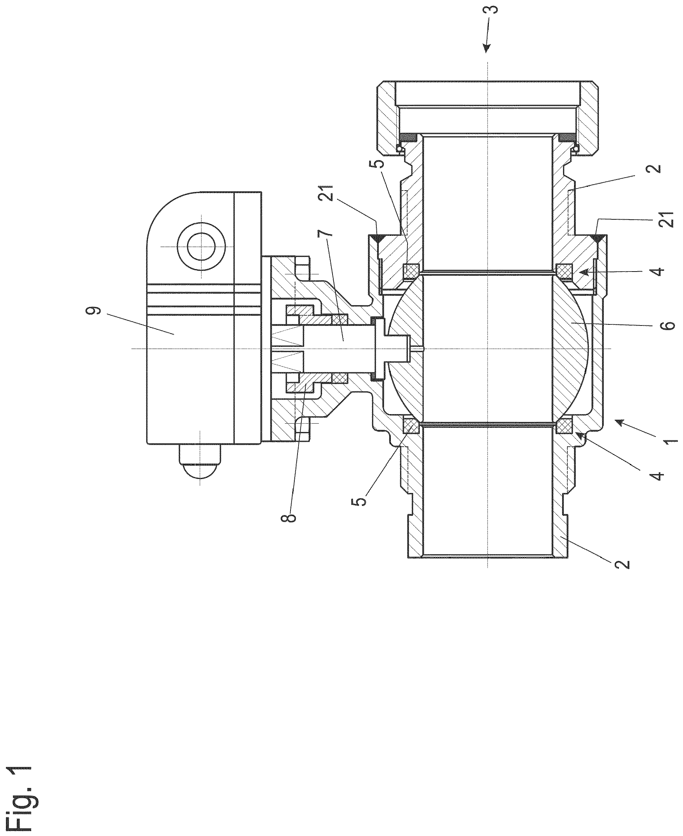

Fig. 1 zeigt in einer schematischen Schnittdarstellung ein Ausführungsbeispiel eines erfindungsgemäßen feuerfesten Kugelhahns. Der Kugelhahn weist einen Ventilkörper 1 auf, der beispielsweise aus einem gegossenen und durch Fräsen, Drehen und/oder Schleifen nachbehandelten Metallkörper besteht. Als Material kann z. B. ein Edelstahl eingesetzt werden. Das in Fig. 1 dargestellte Grundprinzip kann in unterschiedlichen Größen umgesetzt werden. Für Kugelhähne, die als Komponente einer Feuerlöscharmatur eingesetzt werden, sind Größen im Bereich von DN 40/50 gebräuchlich.

Der Ventilkörper 1 weist zu beiden Seiten Anschlussstutzen 2 auf, die im dargestellten Beispiel für unterschiedliche Verbindungsarten zu hin- bzw. wegführenden Rohren ausgebildet sind. Hier sind bekannte Verbindungsarten möglich, beispielsweise Schraub-, Klemm-, Löt-, Schweiß-Verbindungen oder sonstige Verbindungen.

Im dargestellten Ausführungsbeispiel ist der Ventilkörper 1 zweiteilig ausgebildet. Ein erster Teil umfasst einstückig ausgebildet einen mittleren Abschnitt des Kugelhahns mit dem in der Fig. 1 nach links weisenden Anschlussstutzen 2.

Ein zweiter Teil umfasst den nach rechts weisenden Anschlussstutzen 2. Die beiden Teile sind zum Ventilkörper 1 zusammen verschraubt und zusätzlich in einer umlaufenden Schweißnaht 21 miteinander verschweißt, wobei die Schweißnaht 21 als eine Kehlnaht im Bereich des Verschraubungsgewindes ausgebildet ist. Durch die Schweißnaht 21 wird eine hohe Dichtigkeit des Ventilkörpers 1 erreicht und eine hohe Widerstandsfähigkeit bei Hitzeeinwirkung.

In etwa mittig im Ventilkörper ist eine Kugel 6 mit Durchgangsbohrung zwischen Ventilsitzen 4 drehbar gelagert. In der in Fig. 1 gezeigten Stellung der Kugel 6 ist der Kugelhahn geöffnet und ein durchgängiger Strömungspfad 3 durch den Kugelhahn gebildet. Bei Drehung der Kugel um einen Winkel von 90 Grad ist der Strömungspfad 3 verschlossen.

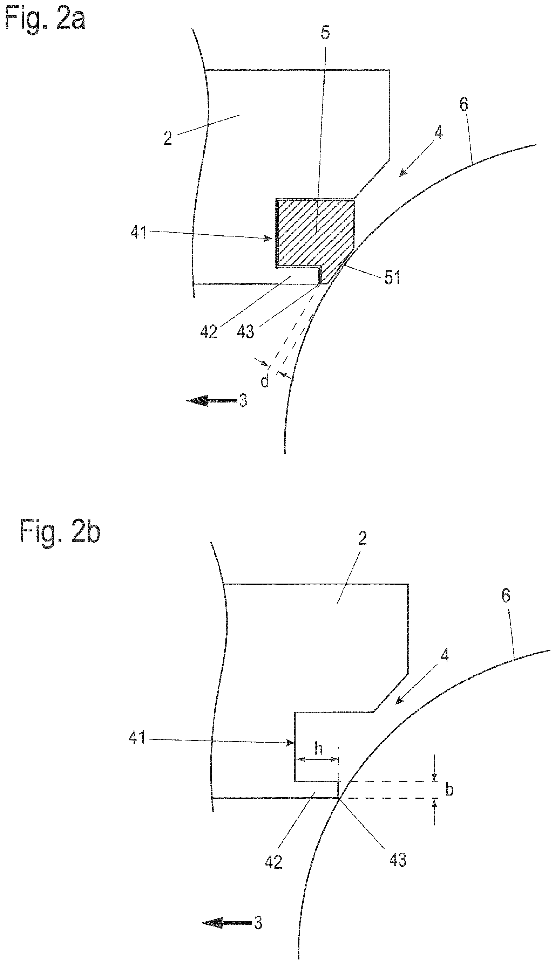

In jedem Ventilsitz 4 ist eine umlaufende Weichdichtung 5 angeordnet. Details zum Ventilsitz 4 und der Weichdichtung 5 werden nachfolgend im Zusammenhang mit den Fig. 2a und 2b erläutert.

Die Kugel 6 steht mechanisch drehfest im Eingriff mit einer Spindel 7, die mittels einer Stopfbuchse 8 gegenüber dem Ventilkörper 1 abgedichtet ist.

Zur drehfesten Verbindung zwischen der Kugel 6 und der Spindel 7 weist die Kugel 6 eine Nut auf, in die eine Feder der Spindel 7 eingreift. Andere Arten der Kopplung sind hier ebenfalls denkbar. Betätigt wird die Spindel 7 über einen Antrieb 9, beispielsweise einen händisch oder motorisch betätigten Antrieb. Auch an dieser Stelle sind unterschiedliche Betätigungsarten denkbar und möglich. Im Bereich der Nut ist eine Druckausgleichsöffnung in die Kugel 6 eingebracht, um z.B. einen temperaturbedingten Überdruck in dem Totvolumen oberhalb der Kugel 6 zu verhindern.

In Fig. 2a ist in einer schematischen Detailvergrößerung der Bereich des Ventilsitzes 4 detaillierter dargestellt. Bei dem Ventilsitz ist in dem Material des Ventilkörpers 1 eine umlaufende Nut 41 ausgebildet, in die die umlaufende Weichdichtung 5 eingesetzt ist. "Weich" bezeichnet dabei eine Materialhärte des Dichtungsmaterials der Weichdichtung 5, die geringer ist als die des Metalls, aus dem der Ventilkörper 1 bzw. die Anschlussstutzen 2 gefertigt sind. Die Weichdichtung kann beispielsweise aus PTFE hergestellt sein, also einem vergleichsweise harten Kunststoff.

Radial nach innen, also zum Strömungspfad 3 hin, begrenzt ein umlaufender Steg 42 die Nut 41. Mit anderen Worten ist das Material des Anschlussstutzens 2 in diesem Bereich beim Einbringen der Nut, also insbesondere beim Eindrehen der Nut 41, in Form des Stegs 42 "stehengeblieben". Die Bedeutung des Stegs 42 wird nachfolgend im Zusammenhang mit der Fig. 2b näher erläutert. Die Dichtung 5 stellt eine Dichtfläche 51 bereit, die in axialer Richtung des Strömungskanals 3 über den Steg 42 hinausragt. Diese Dichtfläche 51 kann beispielsweise angeschrägt oder auch leicht ausgekehlt ausgebildet sein, so dass sie der Form der Oberfläche der Kugel 6 entspricht. Im regulären Betrieb des Kugelhahns liegt die Kugel 6 zur Abdichtung an der Dichtfläche 51 der Dichtung 5 an.

Fig. 2b stellt den Bereich der Fig. 2a nach oder während großer Hitzeeinwirkung dar. Bei großer Hitzeeinwirkung schmilzt oder sublimiert die Weichdichtung 5 bis sie faktisch vollkommen verschwunden ist, zumindest aber keine Dichtwirkung mehr entfalten kann.

Durch den Staudruck des von dem Kugelhahn geführten Fluids wird die Kugel 6 dann an den umlaufenden Steg 42 gedrückt und liegt an einem metallischen Dichtrand 43 an. Bei diesem Dichtrand 43 kann es sich um eine rechtwinklige Kante des umlaufenden Stegs 42 handeln. Der Dichtrand 43 kann durch Anfasen der Kante des Stegs 42 auch verbreitet sein.

Die Anlage der Kugel 6 an den Dichtrand 43 stellt eine Ersatzdichtung für die durch Hitzeeinfluss nicht mehr funktionsfähige bzw. nicht mehr vorhandene Weichdichtung 5 dar. Es wird so erfindungsgemäß eine metallische Dichtung durch den umlaufenden Steg 42 gebildet. Anders als ein großflächiger metallischer Ventilsitz weist der Steg 42 eine Verformbarkeit auf, die zu einer Formanpassung an die Geometrie der Kugel 6 führt und dadurch zu einer guten Abdichtung mit der Kugel 6 mit einer geringen Leckrate. Ein guter Kompromiss zwischen Stabilität und Verformbarkeit des Dichtrands 43 wird erzielt, wenn eine Höhe h des Dichtrands 43 zwischen 3 und 7 mm liegt und eine Breite b zwischen 1 und 3 mm, wobei das Verhältnis der Höhe h zur Breite b vorteilhaft größer als zwei ist.

Insbesondere bei sehr hohen Temperaturen, denen der Kugelhahn im Brandfall ausgesetzt sein kann (über einen längeren Zeitraum bis zu 1000°C), können thermische Spannungen den Ventilkörper verformen. Wenn der metallische Ventilsitz, wie aus dem Stand der Technik bekannt, massiv ausgebildet ist, verformt er sich mit dem Ventilkörper, derart, dass eine Abdichtung mit der Kugel nicht mehr gegeben ist. Der erfindungsgemäße umlaufende Steg 42 kann sich aufgrund seiner Verformbarkeit jedoch auch dann im Bereich des Dichtrands 43 an die Form der Kugel 6 anpassen und die geforderte Dichtigkeit im Brandfall auch dann beibehalten, wenn sich in seinem Fußbereich der Ventilkörper 1 verformt.

Im regulären Betrieb des Kugelhahns, d. h. während die Kugel 6 an der Weichdichtung 5 anliegt, befindet sich der Dichtrand 43 in einem Abstand d von der Oberfläche der Kugel 6 (vgl. Fig. 2a). Bevorzugt ist dieser Abstand d so klein gewählt, dass die Kugel 6 ohne nennenswerte Bewegung entlang der Längsachse des Kugelhahns den als Ersatzdichtung fungierenden Dichtungsrand 43 erreicht. Eine mangelnde Beweglichkeit der Kugel 6, z. B. aufgrund ihrer Kopplung an die Spindel 7, könnte andernfalls eine zuverlässige Dichtung im Brandfall verhindern. Vorteilhaft ist der Abstand d kleiner als 0,5 mm und insbesondere kleiner als 0,2 mm.

In Feuertests gemäß DIN EN ISO 10497 hat ein Ausführungsbeispiel des erfindungsgemäßen Kugelhahns für einen Zeitraum von 60 Minuten bei einer Temperatur von 800 °C (+/- 50 °C) eine Leckrate von nur 0,2 ml/DN/min gezeigt, die um einen Faktor 20 unterhalb der gemäß dem Test zulässigen Leckraten liegt, was die Wirksamkeit des beschriebenen Effekts belegt.

### Bezugszeichenliste

- 1: Ventilkörper
- 2: Anschlussstutzen
- 21: Schweißnaht
- 3: Strömungspfad
- 4: Ventilsitz

- 41: Nut
- 42: umlaufender Steg
- 43: metallischer Dichtrand

- 5: Weichdichtung
- 51: Dichtfläche

- 6: Kugel
- 7: Spindel
- 8: Stopfbuchse
- 9: Antrieb

- h: Höhe
- b: Breite
- d: Abstand

## Patentansprüche

1. Kugelhahn mit einem Ventilkörper (1) mit mindestens zwei Anschlussstutzen (2) und einer drehbar im Ventilkörper (1) gelagerten Kugel (6) mit einer Durchgangsbohrung, wobei zur Abdichtung der Kugel (6) gegenüber den Anschlussstutzen (2) jeweils ein Ventilsitz (4) mit einer ringförmigen Weichdichtung (5) vorhanden ist und eine metallische Dichtung vorgesehen ist, an der die Kugel (6) bei einer hitzebedingten Beschädigung der Weichdichtung (5) anliegt, **dadurch gekennzeichnet, dass** im Ventilkörper (1) eine umlaufende Nut (41) ausgebildet ist, die die ringförmige Weichdichtung (5) aufnimmt, wobei eine radial innere Begrenzung der Nut (41) als ein umlaufender Steg (42) ausgeformt ist, der die metallische Dichtung bildet.

2. Kugelhahn nach Anspruch 1, bei dem eine Höhe (h) des Stegs (42) eine Breite (b) des Stegs (42) übersteigt.

3. Kugelhahn nach Anspruch 2, bei dem die Höhe (h) des Stegs (42) um einen Faktor von mindestens 2 größer als seine Breite (b) ist.

4. Kugelhahn nach einem der Ansprüche 1 bis 3, bei dem die Höhe (h) des Stegs im Bereich von etwa 3 bis 7 mm liegt.

5. Kugelhahn nach einem der Ansprüche 1 bis 4, bei dem die Breite (b) des Stegs im Bereich von etwa 1 bis 3 mm liegt.

6. Kugelhahn nach einem der Ansprüche 1 bis 5, bei dem eine Oberfläche der Kugel (6) bei intakter Weichdichtung (5) um nicht mehr als 0,5 mm und bevorzugt nicht mehr als 0,2 mm von der Anlagefläche des Stegs (42) entfernt ist, an der die Kugel (6) bei beschädigter Weichdichtung (5) anliegt.

7. Kugelhahn nach einem der Ansprüche 1 bis 6, bei dem die Weichdichtung (5) mit einem Abschnitt auf einem Rand des Stegs (42) aufliegt.

8. Kugelhahn nach einem der Ansprüche 1 bis 7, bei dem der Ventilkörper (1) und/oder die Kugel (6) aus Edelstahl gefertigt sind.

9. Kugelhahn nach einem der Ansprüche 1 bis 8, bei dem der Ventilkörper (1) aus zwei Teilen zusammengesetzt ist, die miteinander verschraubt sind.

10. Kugelhahn nach Anspruch 9, bei dem die beiden Teile des Ventilkörpers (1) zusätzlich im Bereich der Verschraubung miteinander verschweißt sind.

11. Kugelhahn nach einem der Ansprüche 1 bis 10, aufweisend eine Spindel (7) zur Drehbetätigung der Kugel (6), die in dem Ventilkörper (1) durch eine Stopfbuchse (8) abgedichtet ist.
